# FASCICULE DE BREVET EUROPEEN

(11) **EP 1 779 460 B1**
(45) Date de publication et mention de la délivrance du brevet: **08.03.2017**
(21) Numéro de dépôt: 05790761.0
(22) Date de dépôt: 21.07.2005
(51) Int. Cl.: H01M 4/48, H01M 4/50, H01M 4/52, H01M 4/58

(54) **ÉLECTRODE POUR ACCUMULATEUR AU LITHIUM, PROCÉDÉ DE FABRICATION D'UNE TELLE ÉLECTRODE ET ACCUMULATEUR AU LITHIUM COMPORTANT UNE TELLE ÉLECTRODE**
ELEKTRODE FÜR EINE LITHIUMBATTERIE, HERSTELLUNGSVERFAHREN FÜR EINE SOLCHE ELEKTRODE UND LITHIUMBATTERIE MIT DER ELEKTRODE
ELECTRODE FOR A LITHIUM BATTERY METHOD FOR PRODUCTION OF SUCH AN ELECTRODE AND LITHIUM BATTERY COMPRISING SAID ELECTRODE

(30) Priorité: 26.07.2004 FR 0408246
(43) Date de publication de la demande: 02.05.2007
(73) Titulaire: Commissariat à l'Énergie Atomique et aux Énergies Alternatives, 75015 Paris (FR)
(72) Inventeur: LE CRAS, Frédéric, F-38470 Notre Dame de L'Osier (FR); MARTINET, Sébastien, F-38000 Grenoble (FR); BOURBON, Carole, F-38590 Saint-Michel De Saint-Geoirs (FR); LAUNOIS, Sébastien, F-38100 Grenoble (FR)
(74) Mandataire: Hecké, Gérard
(86) Numéro de dépôt international: PCT/FR2005/001889
(87) Numéro de publication internationale: WO 2006/018514

(56) Documents cités:
- EP-A- 1 296 391
- EP-A- 1 372 202
- US-A1- 2003 077 517
- US-A1- 2003 219 652
- US-B1- 6 451 482
- WANG Z ET AL: "Structural and electrochemical characterizations of surface-modified LiCoO2 cathode materials for Li-ion batteries" SOLID STATE IONICS, NORTH HOLLAND PUB. COMPANY. AMSTERDAM, NL, vol. 148, no. 3-4, 2 juin 2002 (2002-06-02), pages 335-342, XP004361829 ISSN: 0167-2738
- SHLYAKHTIN O A ET AL: "Particle size control of LiCoO2 powders by powder engineering methods" JOURNAL OF THE EUROPEAN CERAMIC SOCIETY, ELSEVIER SCIENCE PUBLISHERS, BARKING, ESSEX, GB, vol. 23, no. 11, octobre 2003 (2003-10), pages 1893-1899, XP004424284 ISSN: 0955-2219

## Description

### Domaine technique de l'invention

L'invention concerne un procédé de fabrication d'une électrode pour accumulateur au lithium comportant au moins un composé d'intercalation du lithium constitué de cristallites.

### État de la technique

Les accumulateurs au lithium ont tendance à remplacer des accumulateurs nickel-cadmium (Ni-Cd) ou nickel-hydrure métallique (Ni-MH) comme source d'énergie autonome, dans des équipements portables. En effet, les performances, et plus particulièrement les densités d'énergie massique et volumique, des accumulateurs au lithium et des accumulateurs de type lithium-ion sont supérieures à celles des accumulateurs Ni-Cd et Ni-MH. Généralement, l'électrode positive des accumulateurs au lithium comporte un composé actif appelé composé d'intercalation d'ions, tel que TiS₂, NbSe₃, V₂O₅, LiCoO₂, LiNiO₂, LiMn₂O₄ et LiV₃O₈.

Dans les accumulateurs de type lithium-ion, le composé d'intercalation LiCoO₂ présente de très bonnes propriétés électrochimiques. Cependant, la quantité limitée et le prix du cobalt freinent la généralisation de tels accumulateurs lithium-ion dans des applications nécessitant des capacités de stockage élevées.

Par ailleurs, la substitution du cobalt par du nickel ou du manganèse n'est pas satisfaisante. En effet, LiNiO₂ est instable chimiquement à l'état désintercalé, c'est-à-dire à l'état chargé pour l'accumulateur. LiNiO₂ peut alors former de l'oxygène actif en se dismutant et l'oxygène actif formé risque de réagir avec les solvants organiques de l'électrolyte, provoquant alors une explosion de l'accumulateur.

Le composé LiMn₂O₄, stable à température ambiante, est susceptible d'être attaqué par des faibles quantités d'HF contenues dans l'électrolyte, à partir d'une température de l'ordre de 55°C. Cette attaque provoque alors la dissolution du manganèse et une chute de capacité rapide et irréversible de l'accumulateur. A titre d'exemple, dans l'article "Low température synthesis characterization and evaluation of LiMn₂O₄ for lithium ion battery (Canadian metallurgical quarterly vol 43, pages 89 à 93), S. Sengupta et al obtiennent un oxyde de manganèse et lithium au moyen d'une méthode à basse température et présentant un comportement de décharge supérieur à celui d'un matériau disponible commercialement. S. Sengupta et al attribuent cette amélioration de rendement à la taille submicronique du cristallite de la poudre synthétisée.

Il a été proposé de remplacer les oxydes de lithium et de métal de transition par des matériaux ayant une structure isotype de l'olivine, plus particulièrement de type LiMPO₄, où M est un métal tel que le fer. A titre d'exemple, la réaction réversible d'insertion et de désinsertion du lithium dans LiFePO₄ est la suivante :

LiFe^{II}PO₄ ↔ Fe^{III}PO₄ + Li⁺ + e⁻

Ainsi, lors de cette réaction, le fer passe, de façon réversible, d'un état d'oxydation +II à un état d'oxydation +III, un cation Li⁺ et un électron étant alors libérés. Or, le potentiel d'insertion et de désinsertion du composé LiFePO₄, c'est-à-dire le potentiel électrochimique du couple FePO₄/LiFePO₄, est de 3,43V par rapport au potentiel électrochimique du couple Li⁺/Li. De plus, la capacité spécifique de LiFePO₄ est de 170mAh/g. Ces deux valeurs permettent d'obtenir une densité d'énergie massique théorique de 580Wh/Kg alors que la densité d'énergie massique pratique de LiCoO₂ est de l'ordre de 530Wh/kg.

Il est, cependant, difficile de mettre en jeu une capacité spécifique pratique voisine de la valeur théorique de LiFePO₄. En effet, le fait que LiFePO₄ n'a pas de valence mixte et la nature du trajet que l'électron doit emprunter dans la structure olivine donnent, au composé LiFePO₄, un caractère d'isolant électronique. Des substitutions ont été tentées afin de générer un composé à valence mixte de fer mais elles n'ont pas apporté de réels progrès d'un point de vue électrochimique.

Pour remédier à cet inconvénient et obtenir une électrode positive suffisamment conductrice d'électrons, il est courant d'ajouter, au composé LiFePO₄, du carbone dans des proportions variant entre 10% et 15% en poids. Ainsi, dans l'article "Conductivity improvements to spray-produced LiFePO₄ by addition of a carbon source (Materials letters 58 (2004) pages 1788 à 1791), S.L. Bewlay et al. proposent de réaliser un matériau composite de type LiFePO₄/C, pour une électrode positive d'un accumulateur de type lithium-ion, par pulvérisation pyrolitique, en ajoutant aux précurseurs de LiFePO₄, du sucrose destiné à former le carbone. Or, le carbone étant un réducteur, il peut conduire à la formation du composé de phosphure, à la surface des grains de LiFePO₄, ce qui risque de détruire une partie du matériau d'intercalation. De plus, la densité du matériau composite obtenu n'étant pas suffisante, le volume actif ne permet pas d'utiliser un tel matériau composite dans tout type d'application.

Le document US 2003/219652 décrit un procédé de fabrication d'une électrode pour accumulateur au lithium comportant, avant l'étape de traitement thermique, un mélange de précurseurs d'oxyde de manganèse et de lithium (MnO₂ ou MnCO₃ et Li₂CO₃ ou LiOH) avec un ou plusieurs additifs tels que TiO₂, NiO, V₂O₅, B₂O₃ et Al₂O₃.

### Objet de l'invention

L'invention a pour but un procédé de fabrication d'une électrode pour accumulateur au lithium, facile à mettre en oeuvre et permettant d'obtenir une bonne conductivité électronique et un fort rendement de la réaction d'insertion et de désinsertion du lithium.

Selon l'invention, ce but est atteint par les revendications annexées.

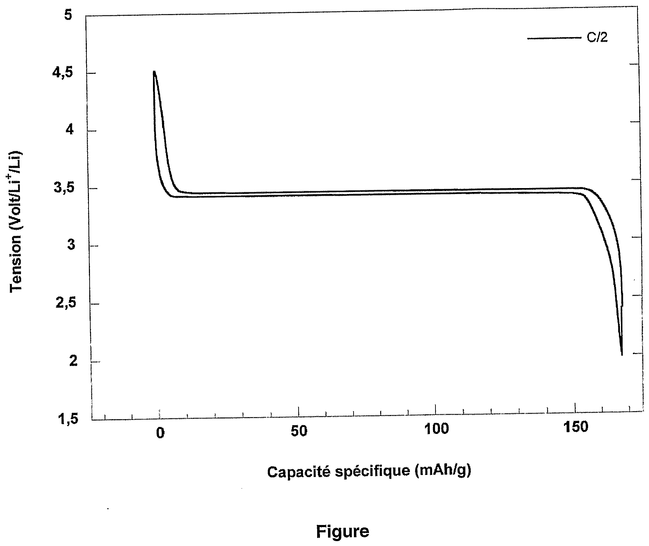

### Description sommaire du dessin

D'autres avantages et caractéristiques ressortiront plus clairement de la description qui va suivre de modes particuliers de réalisation de l'invention donnés à titres d'exemples non limitatifs.

Une courbe tension/capacité spécifique d'un mode particulier de réalisation d'un accumulateur au lithium selon l'invention est représentée à la figure annexée.

### Description de modes particuliers de réalisation

Un accumulateur au lithium comporte au moins des première et seconde électrodes, respectivement positive et négative, et un électrolyte. Dans l'accumulateur au lithium, l'électrode positive comporte au moins un composé actif généralement appelé composé d'insertion du lithium ou composé d'intercalation du lithium. Le composé d'intercalation est constitué de cristallites également appelés particules solides cristallisées.

Le composé d'intercalation du lithium peut, par exemple, comporter un oxyde choisi parmi les oxydes de titane, de vanadium, de chrome, de manganèse, de fer, de cobalt, de nickel, de molybdène, de niobium et leurs combinaisons. Un tel oxyde peut être également substitué ou bien combiné avec de l'oxyde de lithium, des sulfures ou des séléniures d'un ou plusieurs éléments choisis parmi le fer, le molybdène, le niobium et le titane. Il peut aussi être combiné avec des phosphates, des silicates ou des borates mixtes de lithium et d'un élément choisi parmi le titane, le vanadium, le chrome, de manganèse, le fer, de cobalt, le nickel, le molybdène et le niobium ou bien avec des métaux ou des alliages à base d'aluminium, de silicium, de germanium et/ou d'étain.

Un tel composé actif présente la propriété de successivement insérer et désinsérer des cations Li⁺, lors du fonctionnement de l'accumulateur au lithium, pendant des opérations de charge et de décharge.

Selon l'invention, le composé d'intercalation du lithium est associé, dans l'électrode, à un composé additionnel particulier, destiné à améliorer la cinétique de la réaction d'intercalation et de dé-intercalation du lithium, en limitant, au cours de leur formation, la croissance des cristallites constituant le composé d'intercalation du lithium. Par limiter la croissance des cristallites au cours de leur formation, on entend que la croissance des cristallites, ainsi qu'éventuellement celle des précurseurs du composé d'intercalation du lithium, sont limitées pendant la synthèse du composé d'intercalation du lithium ou bien pendant une éventuelle re-cristallisation ultérieure.

L'adjonction, dans l'électrode, d'un composé additionnel permettant de limiter la croissance des cristallites, stable chimiquement par rapport aux cristallites et de préférence réfractaire, permet, en effet, de raccourcir la distance moyenne de parcours des électrons au sein du composé d'intercalation du lithium. Il permet d'augmenter le rendement de la réaction d'insertion et de désinsertion du lithium, notamment pour des cinétiques de réaction compatibles avec des régimes de fonctionnement compris entre 0,5 et 2C. Le rapport massique entre la proportion du composé additionnel et la proportion du composé d'intercalation du lithium est, de préférence, inférieur ou égal à 0,2.

Plus particulièrement, l'amélioration du rendement de la réaction d'insertion et de désinsertion du lithium est obtenue par la formation d'un matériau composite stable, comportant deux phases distinctes. Une première phase est, en effet, formée de cristallites et elle est destinée à réagir selon la réaction d'insertion et de désinsertion du lithium. La seconde phase est constituée du composé additionnel, ayant pour fonction de limiter la croissance des cristallites au cours de leur formation. La seconde phase est, également, stable chimiquement par rapport aux cristallites, c'est-à-dire qu'elle ne réagit pas chimiquement avec les cristallites dans les conditions de synthèse de celles-ci, de recristallisation ou ultérieurement. Le matériau composite ainsi formé peut également être associé à un composé supplémentaire choisi parmi le carbone et les métaux qui, grâce à leur conductivité électronique intrinsèque, améliorent la conductivité électronique du matériau composite.

La présence d'un composé additionnel particulier dans l'électrode permet, ainsi, d'obtenir des cristallites de petites tailles et donc de réduire la longueur de diffusion des électrons au sein de l'électrode. Le composé additionnel forme, en effet, un écran physique à la diffusion, en phase solide, des cristallites constituant le composé d'intercalation et cet écran limite la croissance cristalline. De plus, même les cristallites disposées au coeur de l'électrode, de par leur petite taille, peuvent réagir selon la réaction réversible d'insertion et de désinsertion du lithium.

Le composé additionnel est, de préférence, choisi parmi le groupe comprenant les oxydes, les nitrures, les carbures, les borures et les siliciures d'au moins un élément chimique sélectionné parmi le manganèse, le calcium, l'yttrium, le lanthane, le titane, le zirconium, l'hafnium, le vanadium, le niobium, le tantale, le chrome, le molybdène, le tungstène, l'aluminium, le cérium, le fer, le bore et le silicium. Plus particulièrement, il est choisi parmi le groupe comprenant Y₂O₃, Al₂O₃, TiO₂, ZrO₂, CeO₂, HfO₂, Cr₂O₃, La₂O₃, Fe₂O₃, FeAl₂O₄, CaO, MgO, MgAl₂O₄, MgCr₂O₄ et Y₂TiO₅, TiC, B₄C, SiC, ZrC, WC, NbC et TaC, TiN, BN, Si₃N₄ et AlN, TiB₂ et VB₂ et MoSi₂. De tels composés sont particulièrement adaptés pour être des composés additionnels destinés à réduire la taille des cristallites. De plus, ils sont stables chimiquement et stables électrochimiquement lors du fonctionnement de l'accumulateur au lithium. Par ailleurs, pour des performances de limitation de croissance et de stabilité chimique et électrochimique égales, le choix du composé additionnel est, de préférence, déterminé par le pouvoir de conduction électronique le plus élevé.

De plus, le composé additionnel est, de préférence, choisi de manière à limiter la taille des cristallites à une valeur inférieure ou égale à 2 µm et plus particulièrement inférieure ou égale à 200 nm. Cette limitation de la taille des cristallites est obtenue en limitant la croissance des cristallites, notamment lors de la synthèse du composé d'intercalation du lithium ou lors de sa recristallisation après un endommagement mécanique.

Le composé additionnel peut être sous la forme d'un film ayant une épaisseur inférieure ou égale à 200 nm, et de préférence inférieure ou égale à 20 nm. Le matériau composite se présente alors sous la forme de cristallites du composé d'intercalation du lithium, dispersées dans un film constitué par le composé additionnel. Ce film devant laisser passer les ions Li⁺, est alors soit discontinu, soit continu mais poreux aux ions Li⁺.

Le composé additionnel peut également être sous la forme de particules solides ayant un diamètre inférieur ou égal à 200 nm et de préférence inférieur ou égal à 20 nm et les cristallites sont disposées entre lesdites particules. Dans ce cas, le matériau composite comporte, de préférence, des éléments de support destinés à maintenir la cohésion entre les différentes particules. Un tel élément de support peut être constitué par un liant organique ou par tout autre moyen.

Une électrode pour accumulateur au lithium est, de préférence, réalisée en mélangeant de manière homogène au moins un précurseur du composé d'intercalation du lithium avec le composé additionnel. Puis, un traitement thermique du mélange homogène est réalisé de manière à synthétiser le composé d'intercalation du lithium sous forme de cristallites et à obtenir un matériau composite comprenant au moins deux phases respectivement formées par le composé d'intercalation du lithium et par le composé additionnel. Ensuite, le matériau composite est mis sous la forme d'une électrode par tout type de moyens connus. Il peut, par exemple, être appliqué sur un support métallique.

A titre d'exemple, 0,1 mole d'oxalate de fer (II) dihydrate (FeC₂O₄, 2H₂O) et 0,1 mole de dihydrogénophosphate de lithium (LiH₂PO₄) avec 0,00245 mole d'oxyde d'yttrium (Y₂O₃) sont introduits, sous atmosphère d'argon dans un broyeur planétaire. FeC₂O₄ et LiH₂PO₄ sont sous forme de poudre et forment les précurseurs du composé d'intercalation du lithium LiFePO₄ tandis que Y₂O₃, sous forme de particules ayant un diamètre de 23 nm, constitue le composé additionnel, limitant la formation des cristallites de LiFePO₄. Les poudres sont alors mélangées de manière homogène, pendant 48 heures, dans le broyeur planétaire. Le mélange recueilli subit, ensuite, un traitement thermique d'une heure, à 600°C et sous une atmosphère d'argon, de manière à synthétiser le composé d'intercalation du lithium LiFePO₄. Un matériau composite sous forme de poudre est alors obtenu et une analyse qualitative et quantitative par diffraction X montre la présence de la phase LiFePO₄ dans le matériau composite et indique qu'il comporte 96,5% en poids de LiFePO₄, 3,5% en poids d'Y₂O₃ et des traces de résidus carbonés.

85,5% en poids du matériau composite sont, ensuite, mélangés avec 6,0% en poids de polyfluorure de vinylidène, 5,67% en poids de graphite, 2,83% en poids de noir d'acétylène. Puis, ce mélange est agité avec de la n-méthylpyrrolidone anhydre de manière à obtenir une encre homogène et fluide. L'encre est, ensuite, appliquée sur un feuillard d'aluminium à l'aide d'une racle micrométrique, puis l'ensemble est séché à 120°C pour former une électrode d'un accumulateur au lithium.

Une telle électrode est, ensuite, introduite dans un accumulateur au lithium de type pile bouton et comportant une électrode négative en lithium métallique et un séparateur microporeux en polypropylène imbibé d'un électrolyte comportant un mélange d'éthylène carbonate (EC) et de diméthyl carbonate (DMC), LiPF₆. Comme illustrée à la figure annexée, la courbe tension/capacité spécifique de l'accumulateur au lithium ainsi formé montre que la capacité théorique atteinte, à un régime de charge/décharge de C/2, est compatible avec les conditions de fonctionnement nécessaires pour des applications portables, pour lesquelles, l'opération de charge est réalisée en une ou deux heures maximum tandis que l'opération de décharge doit être lente, de l'ordre de 10 heures environ.

L'invention n'est pas limitée aux modes de réalisation décrits ci-dessus. Ainsi elle concerne, également, un accumulateur au lithium comportant une première électrode selon l'invention, une seconde électrode et un électrolyte. La seconde électrode peut être constituée par tout type de matériau connu pour être employé dans les accumulateurs au lithium. Elle peut, par exemple, être constituée par un matériau formant une source de cations Li⁺ pour l'électrode positive. La source de lithium constituant l'électrode négative est, par exemple, choisie parmi du lithium métallique, un alliage de lithium, un mélange nanométrique d'un alliage de lithium et d'un oxyde de lithium, un nitrure de lithium et de métal de transition.

Dans le cas où l'électrode négative n'est pas constituée par une source de lithium pour l'électrode positive, elle est constituée par un matériau d'intercalation ou d'insertion du lithium tel que du carbone sous forme graphite ou un matériau de structure spinelle comportant du lithium et du titane. Dans ce cas, le lithium ne se trouve jamais sous la forme métallique dans l'accumulateur au lithium, les cations Li⁺ faisant alors des allers-retours entre les deux matériaux d'insertion du lithium des électrodes négative et positive, à chaque charge et décharge de l'accumulateur. Dans ce cas, l'électrode négative peut également comporter un composé additionnel destiné à limiter la taille des cristallites constituant le matériau d'insertion du lithium, ainsi qu'éventuellement du carbone et un liant organique.

De plus, l'électrolyte de l'accumulateur au lithium peut être constitué par tout type de matériau connu. Il peut, par exemple, être constitué par un sel comportant au moins le cation Li⁺. Le sel est, par exemple, choisi parmi LiClO₄, LiAsF₆, LiPF₄, LiR_{F}SO₃, LiCH₃SO₃, LiN(R_{F}SO₂)₂, LiN(R_{F}SO₂)₃, R_{F} étant choisi parmi un atome de fluor et un groupement perfluoroalkyle comportant entre 1 et 8 atomes de carbone. Le sel est, de préférence, dissous dans un solvant polaire aprotique et il peut être supporté par un élément séparateur disposé entre les première et seconde électrodes, l'élément séparateur étant alors imbibé d'électrolyte. Le sel peut aussi être mélangé à un sel fondu comme les sels d'imidazolium et ses dérivés, les sels de pyridinium et ses dérivés et les sels d'ammonium quaternaire.

Il a déjà été proposé d'ajouter un composé additionnel au composé d'intercalation du lithium d'une électrode, sans toutefois que le composé additionnel ajouté ne permette de limiter, lors de leur formation, la taille des cristallites formant le composé d'intercalation. A titre d'exemple, la demande de brevet EP-A-1403944 décrit une électrode positive en matériau graphitique "boré" et son procédé de fabrication. Le matériau graphitique "boré" est composé d'une solution solide dans laquelle les atomes de carbone sont partiellement substitués par des atomes de bore ou par un composé à base de bore tel que le carbure de bore, le borure de cobalt ou le borure d'hafnium. Cependant, contrairement à l'invention, le bore ou le composé à base de bore, dans la demande de brevet EP-A-1403944, n'est pas stable chimiquement par rapport au matériau graphitique constituant le composé d'intercalation du lithium et il n'est pas destiné à limiter la croissance des cristallites lors de leur formation. En conséquence, le matériau graphitique "boré" ne forme pas un matériau composite stable avec deux phases distinctes. L'ajout de bore ou de composé à base de bore, dans la demande de brevet EP-A-1403944, est, au contraire, destiné à stabiliser la structure cristalline du matériau graphitique en introduisant des défauts partiels, de manière à modifier la structure cristallographique du matériau graphitique.

## Revendications

1. Procédé de fabrication d'une électrode pour accumulateur au lithium comportant au moins un composé d'intercalation du lithium constitué de cristallites et comprenant au moins les étapes suivantes :
- mélange homogène d'au moins un précurseur du composé d'intercalation du lithium avec un composé additionnel particulier,
- traitement thermique du mélange homogène synthétisant le composé d'intercalation du lithium
- et mise en forme du matériau composite de manière à obtenir ladite électrode,
procédé **caractérisé en ce que** le composé additionnel particulier sélectionné est stable chimiquement par rapport aux cristallites et audit précurseur, dans les conditions de synthèse du composé d'intercalation du lithium, pour limiter la croissance des cristallites, le traitement thermique formant un matériau composite comprenant au moins une première phase formée par le composé d'intercalation du lithium et une seconde phase constituée par le composé additionnel sélectionné.

2. Procédé selon la revendication 1, **caractérisé en ce que** le composé additionnel est sélectionné parmi le groupe comprenant les oxydes, les nitrures, les carbures, les borures et les siliciures d'au moins un élément chimique sélectionné parmi le manganèse, le calcium, l'yttrium, le lanthane, le titane, le zirconium, l'hafnium, le vanadium, le niobium, le tantale, le chrome, le molybdène, le tungstène, l'aluminium, le cérium, le fer, le bore et le silicium.

3. Procédé selon la revendication 2, **caractérisé en ce que** le composé additionnel est sélectionné parmi le groupe comprenant Y₂O₃, Al₂O₃, TiO₂, ZrO₂, CeO₂, HfO₂, Cr₂O₃, La₂O₃, Fe₂O₃, FeAl₂O₄, CaO, MgO, MgAl₂O₄, MgCr₂O₄ et Y₂TiO₅, TiC, B₄C, SiC, ZrC, WC, NbC et TaC, TiN, BN, Si₃N₄ et AlN, TiB₂ et VB₂ et MoSi₂.

4. Procédé selon l'une quelconque des revendications 1 à 3, **caractérisé en ce que** l'étape de mise en forme comporte au moins l'application du matériau composite sur un support métallique.

5. Procédé selon l'une quelconque des revendications 1 à 4, **caractérisé en ce qu'**au moins un composé supplémentaire choisi parmi le carbone et les métaux est ajouté au matériau composite, entre l'étape de traitement thermique et l'étape de mise en forme.

6. Procédé selon l'une quelconque des revendications 1 à 5, **caractérisé en ce que** le rapport massique, dans le matériau composite, entre la proportion du composé additionnel et la proportion du composé d'intercalation du lithium est inférieur ou égal à 0,2.

7. Procédé selon l'une quelconque des revendications 1 à 6, **caractérisé en ce que** la taille des cristallites dans le matériau composite est inférieure ou égale à 2 µm.

8. Procédé selon la revendication 7, **caractérisé en ce que** la taille des cristallites dans le matériau composite est inférieure ou égale à 200 nm.

9. Procédé selon l'une quelconque des revendications 1 à 8, **caractérisé en ce que** le composé additionnel est sous la forme d'un film ayant une épaisseur inférieure ou égale à 200 nm, les cristallites étant dispersées dans ledit film.

10. Procédé selon la revendication 9, **caractérisé en ce que** l'épaisseur du film est inférieure ou égale à 20 nm.

11. Procédé selon l'une quelconque des revendications 1 à 8, **caractérisé en ce que** le composé additionnel est sous forme de particules ayant un diamètre inférieur ou égal à 200 nm et séparant les cristallites.

12. Procédé selon la revendication 11, **caractérisé en ce que** le diamètre des particules en composé additionnel est inférieur ou égal à 20 nm.

## Patentansprüche

1. Verfahren zur Herstellung einer Elektrode für einen Lithium-Akkumulator, die wenigstens eine Verbindung zur Einlagerung von Lithium, welche von Kristalliten gebildet ist, umfasst, und umfassend wenigstens die folgenden Schritte:
- homogenes Mischen wenigstens eines Vorläufers der Lithium-Einlagerungsverbindung mit einer zusätzlichen besonderen Verbindung,
- Wärmebehandlung der homogenen Mischung, welche die Lithium-Einlagerungsverbindung synthetisiert, und
- Informbringen des Verbundwerkstoffes, um die Elektrode zu erhalten,
Verfahren, **dadurch gekennzeichnet, dass** die ausgewählte zusätzliche besondere Verbindung gegenüber den Kristalliten und dem Vorläufer unter den Bedingungen der Synthese der Lithium-Einlagerungsverbindung chemisch stabil ist, um das Wachstum der Kristalliten zu begrenzen, wobei die Wärmebehandlung einen Verbundwerkstoff bildet, der wenigstens eine erste Phase, welche durch die Lithium-Einlagerungsverbindung gebildet ist, und eine zweite Phase, welche durch die ausgewählte zusätzliche Verbindung gebildet ist, umfasst.

2. Verfahren nach Anspruch 1, **dadurch gekennzeichnet, dass** die zusätzliche Verbindung aus der Gruppe umfassend die Oxide, die Nitride, die Carbide, die Boride und die Silicide wenigstens eines chemischen Elements, ausgewählt aus Mangan, Calcium, Yttrium, Lanthan, Titan, Zirkonium, Hafnium, Vanadium, Niob, Tantal, Chrom, Molybdän, Wolfram, Aluminium, Cer, Eisen, Bor und Silizium, ausgewählt ist.

3. Verfahren nach Anspruch 2, **dadurch gekennzeichnet, dass** die zusätzliche Verbindung aus der Gruppe umfassend Y₂O₃, Al₂O₃, TiO₂, ZrO₂, CeO₂, HfO₂, Cr₂O₃, La₂O₃, Fe₂O₃, FeAl₂O₄, CaO, MgO, MgAl₂O₄, MgCr₂O₄ und Y₂TiO₅, TiC, B₄C, SiC, ZrC, WC, NbC und TaC, TiN, BN, Si₃N₄ und AlN, TiB₂ und VB₂ und MoSi₂ ausgewählt ist.

4. Verfahren nach einem der Ansprüche 1 bis 3, **dadurch gekennzeichnet, dass** der Schritt des Informbringens wenigstens das Aufbringen des Verbundwerkstoffes auf einen metallischen Träger umfasst.

5. Verfahren nach einem der Ansprüche 1 bis 4, **dadurch gekennzeichnet, dass** wenigstens eine zusätzliche Verbindung, die aus Kohlenstoff und Metallen ausgewählt ist, dem Verbundwerkstoff zwischen dem Schritt der Wärmebehandlung und dem Schritt des Informbringens zugegeben wird.

6. Verfahren nach einem der Ansprüche 1 bis 5, **dadurch gekennzeichnet, dass** das Massenverhältnis in dem Verbundwerkstoff zwischen dem Anteil der zusätzlichen Verbindung und dem Anteil der Lithium-Einlagerungsverbindung kleiner als oder gleich 0,2 ist.

7. Verfahren nach einem der Ansprüche 1 bis 6, **dadurch gekennzeichnet, dass** die Größe der Kristalliten in dem Verbundwerkstoff kleiner als oder gleich 2 µm ist.

8. Verfahren nach Anspruch 7, **dadurch gekennzeichnet, dass** die Größe der Kristalliten in dem Verbundwerkstoff kleiner als oder gleich 200 nm ist.

9. Verfahren nach einem der Ansprüche 1 bis 8, **dadurch gekennzeichnet, dass** die zusätzliche Verbindung in Form eines Films mit einer Dicke von weniger als oder gleich 200 nm vorliegt, wobei die Kristalliten in dem Film verteilt sind.

10. Verfahren nach Anspruch 9, **dadurch gekennzeichnet, dass** die Dicke des Films weniger als oder gleich 20 nm beträgt.

11. Verfahren nach einem der Ansprüche 1 bis 8, **dadurch gekennzeichnet, dass** die zusätzliche Verbindung in Form von Partikeln vorliegt, die einen Durchmesser von weniger als oder gleich 200 nm aufweisen und die Kristalliten trennen.

12. Verfahren nach Anspruch 11, **dadurch gekennzeichnet, dass** der Durchmesser der Partikel aus zusätzlicher Verbindung weniger als oder gleich 20 nm beträgt.

## Claims

1. Method for production of an electrode for a lithium battery comprising at least one lithium intercalation compound made up of crystallites and comprising at least the following steps:
- formation of a homogeneous mixture of at least one precursor of the lithium intercalation compound with a specific additional compound,
- thermal treatment of the homogeneous mixture for the synthesis of the lithium intercalation compound,
- and shaping of the composite material so as to obtain said electrode,
method **characterized in that** the selected specific additional compound is chemically stable with respect to crystallites and to said precursor, under the synthesis conditions of the lithium intercalation compound, to limit the growth of the crystallites, the thermal treatment forming a composite material comprising at least a first phase formed by the lithium intercalation compound and a second phase constituted by the selected additional compound.

2. Method according to claim 1, **characterized in that** the additional compound is selected from the group comprising oxides, nitrides, carbides, borides and silicides of at least one chemical element selected from manganese, calcium, yttrium, lanthanum, titanium, zirconium, hafnium, vanadium, niobium, tantalum, chromium, molybdenum, tungsten, aluminium, cerium, iron, boron and silicon.

3. Method according to claim 2, **characterized in that** the additional compound is selected from the group comprising Y₂O₃, Al₂O₃, TiO₂, ZrO₂, CeO₂, HfO₂, Cr₂O₃, La₂O₃, Fe₂O₃, FeAl₂O₄, CaO, MgO, MgAl₂O₄, MgCr₂O₄ and Y₂TiO₅, TiC, B₄C, SiC, ZrC, WC, NbC and TaC, TiN, BN, Si₃N₄ and AIN, TiB₂ and VB₂ and MoSi₂.

4. Method according to any one of the claims 1 to 3, **characterized in that** the shaping step comprises at least application of the composite material on a metallic support.

5. Method according to any one of the claims 1 to 4, **characterized in that** at least a supplemental compound chosen from carbon and metals is added to the composite material between the thermal treatment step and the shaping step.

6. Method according to any one of the claims 1 to 5, **characterized in that** the weight ratio, in the composite material, between the proportion of the additional compound and the proportion of the lithium intercalation compound is lower than or equal to 0.2.

7. Method according to any one of the claims 1 to 6, **characterized in that** the size of the crystallites in the composite material is less than or equal to 2 µm.

8. Method according to claim 7, **characterized in that** the size of the crystallites in the composite material is less than or equal to 200 nm.

9. Method according to any one of the claims 1 to 8, **characterized in that** the additional compound is in the form of a film having a thickness less than or equal to 200 nm, the crystallites being dispersed in said film.

10. Method according to claim 9, **characterized in that** the thickness of the film is less than or equal to 20 nm.

11. Method according to any one of the claims 1 to 8, **characterized in that** the additional compound is in the form of particles having a diameter less than or equal to 200 nm and separating the crystallites.

12. Method according to claim 11, **characterized in that** the diameter of the particles of the additional compound is less than or equal to 20 nm.
